# EUROPÄISCHE PATENTSCHRIFT

(11) **EP 3 569 354 B1**
(45) Veröffentlichungstag und Bekanntmachung des Hinweises auf die Patenterteilung: **21.12.2022**
(21) Anmeldenummer: 19169822.4
(22) Anmeldetag: 17.04.2019
(51) Int. Cl.: B23Q 3/06, B25B 1/24

(54) **VORRICHTUNG ZUR FIXIERUNG VON WERKSTÜCKEN UND BEARBEITUNGSANLAGE.**
DEVICE FOR FIXING WORKPIECES AND PROCESSING UNIT
DISPOSITIF DE FIXATION DE PIÈCES À USINER ET INSTALLATION D'USINAGE

(30) Priorität: 18.05.2018 DE 102018112028
(43) Veröffentlichungstag der Anmeldung: 20.11.2019
(73) Patentinhaber: TMD Friction Services GmbH, 51381 Leverkusen (DE)
(72) Erfinder: Hecht, Axel, 50769 Köln (DE); Stinn, Fabian, 51491 Overath (DE)
(74) Vertreter: Müller, Eckhard

(56) Entgegenhaltungen:
- US-A1- 2002 144 752
- US-A1- 2006 108 729

## Beschreibung

Die Erfindung betrifft eine Vorrichtung zur Fixierung von Werkstücken, mit wenigstens zwei Spannmitteln, die jeweils aus einer Ruheposition in Richtung zu einer durch die Werkstückkontur vorgegebenen Spannposition verschiebbar sind, um die Spannmittel an die Kontur des Werkstücks zu legen. Derartige Vorrichtungen dienen dem Fixieren von unregelmäßig geformten Werkstücken, die beispielsweise für die Vornahme einer mechanischen Bearbeitung festgelegt werden müssen.

Auf dem Gebiet der Fertigung von Bremsbelägen und den zugehörigen Belagträgerplatten ist es bekannt, Werkstückhalter mit einer an die Werkstückkontur angepassten Aufnahme vorzusehen, in der das eingelegte Werkstück formschlüssig festgelegt ist. Dies erweist sich jedoch als unflexibel und kostenintensiv, da bei einem Wechsel des herzustellenden Produkttyps sämtliche Werkstückhalter einer Bearbeitungsmaschine bzw. -anlage ausgetauscht werden müssen.

Eine Vorrichtung der eingangs genannten Art zum Einspannen unregelmäßig geformter Werkstücke wird beispielsweise in der WO 2005/049278 A1 beschrieben. Als Spannmittel sind Spannbacken vorgesehen. Jede Spannbacke weist eine Spannseite auf, die von einer Reihe verschiebbarer Spannstößel gebildet wird, welche an die Kontur des zu spannenden Werkstücks angelegt werden. Die Spannstößel sind zylinderartig ausgebildet, weisen abgerundete Vorderseiten zum Anlegen an das Werkstück auf und stehen mit einem Hydrauliksystem in Verbindung, welches ein magnetorheologisches Arbeitsfluid nutzt. Das Arbeitsfluid wird beim Anlegen eines Magnetfeldes zur Arretierung der Spannstößel gegenüber dem Werkstück verwendet. Die Spannstößel sind in Stößelführungen linear verschiebbar, in denen Stößelkammern vorgesehen sind, zwischen denen Verbindungs-bzw. Flüssigkeitswege in Form von Kanälen verlaufen. Durch die Kanäle wird das magnetorheologisches Fluid in eine oder mehrere Stößelkammern gedrückt, sodass sämtliche Stößel eines Spannbackens miteinander gekoppelt sind und die Bewegung eines Stößels die Bewegung eines anderen Stößels bewirkt. Das Anlegen eines Magnetfeldes soll eine starke Erhöhung der Viskosität bzw. eine schlagartige Erstarrung des Arbeitsfluids bewirken, wodurch die Spannstößel nicht mehr bewegbar sind. In dieser von dem Werkstück eingenommenen Position sind die Spannstößel also fixiert, was jedoch mit dem Nachteil verbunden ist, dass die Spannstößel nicht nachgestellt und nicht weiter an die Kontur des Werkstücks angepasst werden können, falls das Werkstück in der eingenommenen Position verrutscht oder nachgibt. Das Magnetfeld wird mittels eines Elektromagneten erzeugt, so dass für die Fixierung des Werkstücks auch eine für die Dauer des Einspannens eine externe Energiezufuhr notwendig ist.

In der DE 100 26 829 A1, ist ebenfalls eine Spannvorrichtung zum Spannen von Werkstücken angegeben, wobei als Spannmittel eine Reihe von stangen- oder rohrförmigen Spannelementen mit gerundeten Köpfen dienen, die an das Werkstück angelegt werden. Hierzu weist die Vorrichtung zwei aus je einem Block gebildete Teile auf, welche durch ein jochartiges Verbindungsteil in einem vorgegebenen Abstand gehalten werden.

In den Blöcken befinden sich Vertiefungen, in denen je eine Spanneinrichtung eingesetzt ist, welche jeweils das stangen- oder rohrförmige Spannelement aufweist. Das Spannelement ist zu der dem Werkstück zugewandten Oberfläche des betreffenden Blocks ausfahrbar, bis es an das zwischen den Blöcken angeordnete Werkstück anstößt. Durch motorische Antriebe sollen die Spannelemente dabei mit einstellbarer Kraft gegen das Werkstück gepresst werden, so dass dieses unverrückbar festgelegt ist. Zudem wird eine Arretierungsvorrichtung betätigt, welche das Spannelement in dieser Position festhalten soll, so dass der Antrieb abgeschaltet werden kann und das Werkstück in seiner einmal festgelegten Position verharrt. Für die Betätigung der Arretierungsvorrichtung ist ein hydraulisches oder elektrisches System vorgesehen, d.h. bei dieser vorbekannten Vorrichtung werden für die Fixierung des Werkstücks externe Energiequellen eingesetzt.

Bei der aus der EP 0 899 061 A2 bekannten Spannvorrichtung werden eine Reihe von Spannstößel mit gerundetem Kopf als Spannmittel verwendet, die an die Kontur eines Werkstücks anlegbar sind und durch eine Arretiervorrichtung in einer Spannstellung fixiert werden. Die Spannstößel sind dabei in einer Ausnehmung in einem Gehäusegrundkörper von Spannbacken verschiebbar gelagert. An seinem von der Spannseite abgewandten Ende umfasst der Spannstößel eine kolbenartige Erweiterung. Der Spannstößel ist mit dieser kolbenartigen Erweiterung in einem Zylinderraum verschiebbar angeordnet. Durch Anlage der kolbenartigen Erweiterung an einen axialen Anschlag des Zylinderraums soll eine Endstellung des Spannstößels definiert sein. Die kolbenartige Erweiterung soll mittels einer O-RingDichtung dichtend in dem Zylinderraum gleiten, wodurch ein doppelt wirkender Zylinder gebildet wird. Beide Seiten des doppelt wirkenden Zylinders sollen wiederum mit einer nicht näher beschriebenen pneumatischen Steuereinrichtung kommunizieren, und zwar mittels mit Druckluft beaufschlagbaren Leitungen. Durch Anlegen eines pneumatischen Drucks sollen sich die Spannstößel dann in die eine oder andere Endstellung oder in eine beliebige Zwischenstellung verfahren lassen.

Aus der EP 0 899 061 ist eine Arretierungseinrichtung zum Festlegen eines Spannstößels gegenüber dem Gehäusegrundkörper vorgesehen. Die Arretierungseinrichtung umfasst Klemmmittel in Form von Klemmkolben, die in einem radial zur Längserstreckung des Spannstößels vorgesehenen Zylinderraum verschiebbar sind und von einer hydraulischen Einrichtung steuerbar sein sollen. Der Klemmkolben umfasst zudem einen an die Umfangsfläche des Spannstößels anlegbaren Klemmbereich, welcher an die Kontur der Umfangsfläche des Spannstößels angepasst ist und eine vollflächige Auflage des Klemmkolbens am Spannstößel gewährleisten soll. Wenn eine Spannstellung erreicht ist, soll über die hydraulische Einrichtung Druck auf den Klemmkolben ausgeübt werden, so dass dieser in klemmende Anlage an die Umfangsfläche des Spannstößels gelegt und der Spannstößel in seiner eingenommenen Verschiebelage fixiert wird.

Die EP 0 739 672 B1 offenbart eine Spannvorrichtung zum Spannen eines Werkstückes, das mittels einer Vielzahl von unabhängig voneinander hydraulisch verschiebbaren und jeweils einen runden Kopf aufweisenden Spannstößeln fixiert wird. Der innere Endbereich jedes Spannstößels ist mit einem Stößelkolben versehen, der hydraulisch in einem Stößelzylinder verschiebbar angeordnet ist.

Der Zylinderraum des Stößelzylinders soll dabei durch ein hydraulisch betätigbares Absperrventil verschließbar sein. Zum Ausfahren der Stößel in Richtung des Werkstücks werden die Absperrventile hydraulisch in die geöffnete Stellung bewegt, so dass Hydraulikflüssigkeit in die Stößelzylinder eindringen und die Stößel nach außen verschieben kann. Ihre Bewegung wird durch den Anschlag an einem einzuspannenden Werkstück begrenzt. Nach dem Erreichen der Spannstellung werden die Absperrventile in ihre Sperrstellung gebracht, so dass die Spannstößel in der Spannposition fixiert werden. Rückschlagventile sollen dafür sorgen, dass die Absperrventile auch bei Wegfall der äußeren Druckversorgung in der geschlossenen Stellung bleiben.

Diesen aus dem Stand der Technik bekannten Vorrichtungen zur Fixierung von Werkstücken ist zudem gemeinsam, dass die Werkstücke mehrseitig gespannt werden. Dies geht mit einem hohen Energiebedarf für die Verschiebung und Fixierung der Spannmittel einher. Heutige Produktionsabläufe müssen jedoch zunehmend wirtschaftlicher gestaltet werden, d.h. Produktionsabläufe müssen optimiert, Ressourcen gespart und ihre Energieeffizienz erhöht werden. Hierzu gehört auch das Spannen von Werkstücken für die Bearbeitung des Werkstücks, wie beispielsweise eines Bremsbelags, in Produktionsabläufen. Zudem zeichnen sich die vorbekannten Spannvorrichtungen durch die Positionierung der Spannmittel und die darauffolgende Fixierung der Spannmittel aus, d.h. durch zwei Arbeitsschritte, was einer Optimierung des Spannprozesses eher zuwiderläuft. Die vorstehend beschriebenen Spannvorrichtungen sind für den Einbau in eine Bearbeitungsanlage mit mehreren Fixiervorrichtungen und Bearbeitungsstationen insbesondere für die Massenproduktion ungeeignet, da die Position des Werkstücks zwischen den Spannmitteln erst bei erfolgtem Spannen eindeutig festgelegt ist.

Derart aufwendige Spannprozesse sind auch aus der US 4,949,947 A1 und der EP 0 641 623 A1 bekannt. Die US 4,949,947 A1 offenbart einen Halter zum Festlegen eines Brillengestelles. Die EP 0 641 623 A1 offenbart eine Spanneinrichtung, bei welcher ein Werkstück auf einem Maschinentisch festgelegt werden kann. Bei beiden Druckschriften erfolgt das Festlegen manuell durch das Anziehen einer Spannschraube.

Eine Vorrichtung mit den Merkmalen des Oberbegriffs von Anspruch 1 ist aus der US 2002/144752 A1 bekannt.

Es ist Aufgabe der vorliegenden Erfindung, eine Vorrichtung der eingangs genannten Art derart weiter zu entwickeln, die eine schnelles und zugleich positionsgenaues Spannen eines Werkstücks erlaubt, wobei dies weitestgehend unabhängig von der Gestalt der Werkstückkontur erfolgen soll.

Diese Aufgabe wird mit den Merkmalen des Anspruchs 1 gelöst. Vorteilhafte Ausgestaltungen der Erfindung ergeben sich aus den Unteransprüchen.

Gemäß der Erfindung ist eine Vorrichtung zur Fixierung von Werkstücken vorgesehen, mit wenigstens zwei Spannmitteln, die jeweils aus einer Ruheposition in Richtung zu einer durch die Werkstückkontur vorgegebenen Spannposition verschiebbar sind. Die Erfindung zeichnet sich dadurch aus, dass eine Einspannauflage für das einzuspannende Werkstück vorgesehen ist und die Spannmittel jeweils federgetrieben in ihre Spannpositionen verfahrbar sind, in welcher das auf der Einspannauflage aufliegende Werkstück mittels der Spannmittel gegen wenigstens einen Anschlag spannbar ist.

Die Erfindung hat den besonderen Vorteil, dass Werkstücke weitgehend unabhängig von der Gestalt ihrer Kontur schnell und sicher für eine mechanische Bearbeitung in einer durch den Anschlag definierten Position eingespannt werden können. Aufgrund der federgetriebenen Spannmittel, die das Werkstück unter dem dauernden Einfluss der Federspannung gegen den Anschlag drücken, ist keine weitere von außen in die Vorrichtung zugeführte Energie erforderlich, um den Spannzustand aufrecht zu erhalten. Energie wird dagegen nur dann von außen zugeführt, wenn die Einspannung aufgehoben wird, indem die Spannmittel aus ihrer jeweiligen Spannposition entgegen der Federkraft in ihre Ruheposition überführt werden.

Das Federelement ist ein mechanischer Energiespeicher, der Spannenergie in Form von potentieller Energie speichert, deren Größe mit der Verkürzung oder Verlängerung des Federelements unter Einwirkung einer äußeren Kraft steigt. Die so zugeführte Energie wird bis zum nächsten Einspannen als potenzielle Energie in der Vorrichtung gespeichert. Sollte das Werkstück im Verlauf der maschinellen Bearbeitung oder zu einem anderen Zeitpunkt während der Einspannung verrutschen oder nachgeben, wird das jeweilige Spannmittel mittels des Federtriebs selbsttätig nachgestellt.

Ein weiterer Effekt der Erfindung ist es, dass größere Werkstücke stärker eingespannt werden können, da größere Werkstücke größere Verkürzungen bzw. Verlängerungen des Federelements bewirken. Hierdurch wird mehr Spannenergie in Form von potentieller Energie gespeichert, was wiederum zur Folge hat, dass eine größere Gegenkraft in Form einer Spannkraft auf das Werkstück wirkt. Mit der erfindungsgemäßen Vorrichtung wird zudem ein kompaktes und autarkes System zur Verfügung gestellt, dass mobil verwendet und an verschiedenen Bearbeitungsstellen eines Produktionsablaufs positioniert werden kann.

Die einzelnen Spannmittel sind relativ zueinander bewegbar. Während eines Einspannvorgangs verfährt das jeweilige Spannmittel federgetrieben in Richtung seiner Spannstellung. Das Spannmittel kommt an der Werkstückkontur zu liegen, wodurch die Spannstellung definiert wird. Auf diese Weise kann jedes Spannmittel in einer individuellen Spannstellung entlang seiner Bewegungsrichtung an der Werkstückkontur zu liegen kommen und das Werkstück gegen den Anschlag spannen. Somit passen sich die Spannstellungen der einzelnen Spannmittel an die Werkstückkontur an. Dieses Anlegen bzw. Anpassen an die Werkstückkontur hat den zusätzlichen Vorteil, dass es zu einem seitlich wirkenden Formschluss kommen kann, durch welchen das Werkstück zusätzlich gegen ein mögliches Ausweichen quer zur Verfahrrichtung der Spannmittel gesichert wird.

Gemäß der Erfindung sind die Spannmittel entlang der Einspannauflage beweglich geführt. Auf diese Weise lassen sich flach ausgeführte Werkstücke besonders gut einspannen bei gleichzeitig flacher Bauhöhe der Vorrichtung. Erfindungsgemäß ist vorgesehen, dass die Spannmittel jeweils in einer Spannmittelführung geführt sind. Eine Spannmittelführung ermöglicht das Verfahren der Spannmittel entlang einer vorgegebenen Bahn. Erfindungsgemäß ist die Spannmittelführung in die Einspannauflage eingelassen, wodurch auf zusätzliche Bauteile zur Führung der Spannmittel weitgehend verzichtet werden kann.

Erfindungsgemäß weisen die Spannmittel jeweils ein in Richtung der Spannposition wirkendes Federelement auf. Eine solche Ausgestaltung ermöglicht eine individuelle Beweglichkeit der einzelnen Spannmittel unter dem Einfluss einer individuell wirkenden Federkraft, so dass sich unterschiedlich große Spannkräfte an den Spannmitteln abhängig von der jeweiligen Spannposition des Spannmittels ausbilden können. Die Spannposition des jeweiligen Spannmittels ist von der Werkstückkontur abhängig.

Ein weiterer Vorteil eines mechanischen Federelementes gegenüber einer hydraulischen Betätigung der Spannmittel ist, dass eine Leckage von Hydraulikfluid nicht auftreten kann. Außerdem wird hierdurch die Komplexität verringert, da keine Hydraulikkomponenten verbaut werden müssen. Dies ist auch unter wirtschaftlichen Gesichtspunkten bei der Anschaffung und hinsichtlich der Umweltfreundlichkeit von Vorteil. Federelemente können in verschiedenen Stärken und Längen mit unterschiedlichen Federkonstanten und auch unterschiedlichen Federkennlinien ausgewählt werden. Gegenüber einer hydraulischen Betätigung der Spannmittel sind Federelemente typischerweise auch aufgrund ihres geringen Eigengewichtes von Vorteil.

Dabei kann wenigstens eines der Federelemente als Zugfeder ausgebildet sein, die vorzugsweise zwischen einer Stirnseite der Vorrichtung und dem Spannmittel eingespannt ist. Alternativ oder zusätzlich kann vorgesehen sein, dass wenigstens eines der Federelemente als Druckfeder ausgebildet ist, die vorzugsweise zwischen einer dem Anschlag gegenüberliegenden Seite der Vorrichtung und dem Spannmittel eingespannt ist. Zugfedern haben den Vorteil, dass bei der Auslenkung lange Federwege möglich sind, so dass eine Verstellung des jeweiligen Spannelementes über einen großen Weg vorgesehen werden kann, und dass eine Führung der Feder gegen ein seitliches Ausweichen bei Belastung nicht erforderlich ist. Demgegenüber haben Druckfedern, wenn sie beispielsweise als Schraubenfedern ausgebildet sind, den Vorteil, den maximalen Federweg durch das Aufsetzen der einzelnen Federwindungen aufeinander zu begrenzen und so einer Überlastung der Feder entgegenzuwirken. Je nach vorgesehenem Anwendungsfall kann es vorteilhaft sein, einzelne oder alle Spannelemente mit einer Zug- oder Druckfeder oder mit beidem zu versehen.

Gemäß der Erfindung ist vorgesehen, dass die Spannmittel von der Einspannauflage vorstehen und sich vorzugsweise in ihrer Längsrichtung quer zur Einspannauflage erstrecken. Eine solche Ausgestaltung hat sich als besonders vorteilhaft beim Einspannen flacher Bauteile erwiesen, die einer flächigen mechanischen Bearbeitung unterzogen werden sollen, wobei die Spannmittel kein Hindernis für die Bearbeitungswerkzeuge darstellen.

In einer Ausgestaltung der Erfindung kann vorgesehen sein, dass wenigstens eines der Spannmittel und/oder der Anschlag zum Niederhalten des Werkstücks auf die Einspannauflage ausgebildet ist bzw. sind. Dabei kann eine an dem Werkstück angreifenden Spannfläche und/oder Anschlagsfläche vorzugsweise schräg ausgebildet und zur Einspannauflage geneigt sein. Gerade bei mechanischen Bearbeitungsschritten, bei welchen das Werkstücken auch mit Kräften beaufschlagt wird, die von der Einspannauflage weggerichtet sind, kann ein noch sicherer Halt des Werkstücks durch ein zusätzliches Niederhalten erzielt werden. Die in Richtung der Einspannauflage wirkende, resultierende Niederhaltekraft ist eine durch die schräge Ausbildung der Spannmittel bzw. des Anschlags hervorgerufene Kraftkomponente der durch die Spannmittel auf das Werkstück ausgeübten Spannkraft. Die zunächst nur in einer Richtung wirkende und auf die Spannmittel ausgeübte Federkraft bzw. Spannkraft wird somit in eine in Richtung des Anschlags und eine in Richtung der Einspannauflage gerichtete Kraftkomponente aufgeteilt. Über die Ausprägung der Schräge an der Spannfläche und/oder Anschlagsfläche kann die Aufteilung der Kraftkomponenten eingestellt werden.

Bevorzugt beträgt dabei der zwischen der Spannfläche bzw. der Anschlagsfläche und der Einspannauflage eingeschlossene Winkel zwischen 85° und 89°, bevorzugt 87°, um eine optimale Spannwirkung zu erzielen. Dieser Bereich des Winkels hat sich als besonders vorteilhaft herausgestellt, um die resultierende Kraft der Feder teilweise in Richtung der Einspannauflage umzulenken. So kann hier eine Art Formschluss erreicht werden, ohne dass es zu Beschädigungen am Werkstück oder sogar zu einer Selbsthemmung bzw. zu einem Verklemmen kommt.

In einer vorteilhaften Variante der Erfindung kann vorgesehen sein, dass das Spannmittel und/oder der Anschlag lösbar an der Vorrichtung vorgesehen ist bzw. sind. Durch ein Weglassen einzelner oder einen Wechsel einzelner oder aller Spannmittel bzw. des Anschlags lässt sich die Vorrichtung an unterschiedliche Spannaufgaben anpassen. Dadurch, dass das Spannmittel lösbar in der Spannmittelführung angeordnet ist, kann ein Spannmittel gegen ein anderes Spannmittel ausgetauscht werden. Hierdurch ist wiederum gewährleistet, dass ein Spannmittel noch genauer an ein Werkstück angepasst werden kann. Beispielsweise können für ein Werkstück mit einer größeren Dicke längere Spannmittel gewählt werden. Hierbei kann vorteilhafterweise auch vorgesehen sein, dass der Anschlag lösbar an der Einspannauflage angeordnet ist. Es können auch Spannmittel und Anschläge mit unterschiedlich ausgestalteten Außenschrägen verwendet werden, um die Niederhaltefunktion zu verändern.

Sowohl der Anschlag als auch das die Spannmittel können mittels einer Schraubverbindung mit der Vorrichtung verbunden sein. Der Anschlag kann stirnseitig und bevorzugt an der Einspannauflage beispielsweise mittels Schraubbolzen festgelegt werden. Dabei können die Schraubbolzen Bohrungen innerhalb des Anschlags durchsetzen und in ein in der Einspannauflage vorgesehenes Gewinde jeweils eingreifen. Die Spannmittel können beispielsweise mittels einer Schraubverbindung an einem innerhalb der Vorrichtung beweglich vorgesehenen Verbindungsteil festgelegt werden, wobei das Verbindungsteil einen Gewindebolzenfortsatz aufweisen kann, auf welchen das oder die Spannmittel aufgeschraubt werden. Alternativ kann jedes Spannmittel einen Gewindebolzenfortsatz aufweisen, der in ein Innengewinde des Verbindungsteils einschraubbar ist.

Nach der Erfindung kann auch vorgesehen sein, dass wenigstens zwei der Spannelementführungen etwa parallel zueinander verlaufen. Es hat sich herausgestellt, dass eine so ausgeführte Spannvorrichtung besonders flexibel für unterschiedlich geformte Werkstücke einsetzen lässt.

Die Kopplung des Spannmittels mit dem Federelement erfolgt dabei erfindungsgemäß in der Weise, dass das Spannmittel mit einem Verbindungsteil verbunden ist, welches mit dem Federelement in mechanischer Verbindung steht. Das Federelement ist in einer Führungstasche unterhalb der Einspannauflage gehalten und stützt sich einerseits am Boden der Tasche und andererseits an dem Verbindungsteil ab. Das Verbindungsteil kann unterhalb der Einspannauflage längsverschieblich geführt sein, so dass es unter Aufbau oder Abbau einer Federrückstellkraft verschieblich ist.

Das Verbindungsteil kann zusätzlich einen Innendorn zur Führung der Feder aufweisen, um ein Knicken des Federelementes unter Belastung zu vermeiden. Das Verbindungsteil kann als Teil eines Führungswagens ausgebildet sein, der innerhalb der Vorrichtung längsverschieblich geführt ist.

Vorteilhafterweise kann vorgesehen sein, dass die Spannmittel für ein Verschieben entgegen der in Richtung der Spannposition wirkenden Federkraft mit einer Rückholeinrichtung koppelbar sind. Ein in der Vorrichtung eingespanntes Werkstück lässt sich auf diese Weise besonders einfach und schonend aus der Vorrichtung entnehmen, wenn die Spannmittel in ihre Ruheposition zurückgezogen werden. Sofern die Rückholeinrichtung separat zu der Vorrichtung ausgeführt ist, liegt der besondere Vorteil vor, dass die Vorrichtung im gespannten Zustand eine Bearbeitungsstraße durchlaufen kann, dabei die für das Einspannen erforderliche Spannkraft selbsttätig durch den Federtrieb oder Federspeicher aufbringt und erst nach der Bearbeitung wieder mit der Rückholeinrichtung zeitweise gekoppelt werden muss. Die Vorrichtung kann somit kleiner und handlicher gestaltet werden.

Vor Vorteil kann es auch sein, dass wenigstens eines der Spannmittel eine konvex ausgebildete Spannfläche zum Angreifen an dem Werkstück aufweist. Die konvexe Ausbildung des Spannmittels liegt dabei in wenigstens einer Schnittebene vor und trägt dazu bei, dass es bei der Kontaktierung der Werkstückkontur zu einer definierten linien- oder punktförmigen bzw. tangentialen Anlage kommt. Dies trägt zu einer sicheren und definierten Einspannung des Werkstücks weitgehend unabhängig von der Gestalt seiner Außenkontur bei.

Die der Erfindung zugrundeliegende Aufgabe wird gemäß Anspruch 10 ferner durch eine Bearbeitungsanlage mit einer Vorrichtung nach einem der vorhergehenden Ansprüche gelöst. Eine derartige Bearbeitungsanlage kann beispielsweise eine Bearbeitungsstraße zur Bearbeitung von Bremsbelägen oder Belagträgerplatten für die Herstellung von Bremsbelägen für Kraftfahrzeuge sein.

Eine solche Bearbeitungsanlage kann sich ferner dadurch auszeichnen, dass wenigstens eine Bearbeitungsstation zum mechanischen Bearbeiten eines in der Vorrichtung gehaltenen Werkstücks vorgesehen ist, in die die Vorrichtung mittels einer Transporteinrichtung zu- und abführbar ist. Zudem ist es vorgesehen, dass die Bearbeitungsanlage eine wie die nachfolgend beschriebene Rückholeinrichtung für ein Verschieben der Spannmittel zur Ruheposition aufweist. Auf diese Weise kann eine Vielzahl von erfindungsgemäßen Vorrichtungen gleichzeitig in einer Anlage verwendet werden.

Es ist ebenfalls möglich, eine Betätigungsvorrichtung anzugeben, mittels welcher das Betätigen einer Spannvorrichtung für Werkstücke vollständig oder zumindest annähernd außenreaktionskraftfrei erfolgen kann. Die Betätigungsvorrichtung ist zum Einleiten einer Zugkraft und einer dazu entgegengesetzten Druckkraft in eine Vorrichtung vorgesehen und weist wenigstens ein Zugglied zum Übertragen der Zugkraft auf die Vorrichtung und wenigstens ein Druckglied zum Übertragen der Druckkraft auf die Vorrichtung auf. Dabei sind das wenigstens eine Zugglied und das wenigstens eine Druckglied zur Erzeugung einer Relativbewegung über einen dazwischen schwimmend gelagerten Aktuator wirkverbunden.

Eine derartige Ausgestaltung der Betätigungsvorrichtung hat sich insbesondere als vorteilhaft zur Betätigung der vorstehend beschriebenen Vorrichtung zum Spannen von Werkstücken erwiesen, die aus ihrem gespannten Zustand in den gelösten Zustand durch das Einleiten einer Zugkraft überführt wird, die als Rückzugskraft auf die Spannmittel wirkt. Mit dieser Betätigungsvorrichtung wird auf die andere Vorrichtung gleichzeitig eine entgegengesetzte Druckkraft ausgeübt, so dass die Vorrichtung, in die die Zugkraft und die entgegengesetzte Druckkraft eingeleitet wird, nach außen praktisch reaktionskraftfrei bleibt. Dadurch kann eine für die Vorrichtung vorgesehene Transporteinrichtung einfacher gestaltet werden, da diese keine der Rückholkraft entgegensetzte Reaktionskraft abstützen muss.

Das Grundprinzip der vorliegenden Erfindung beruht auf einer gegensinnigen Kopplung des Zugglieds durch ein Druckglied mittels eines dazwischen schwimmend gelagerten Aktuators, durch welchen die Relativpositionen zwischen Zugglied und Druckglied selbsttätig zueinander ausgerichtet werden. Im vorliegenden Fall kann die Betätigungsvorrichtung Teil einer bereits oberhalb beschriebenen Bearbeitungsanlage bzw. Bearbeitungsstation sein. Darin können eine oder mehrere Vorrichtungen zum Halten von Werkstücken verwendet werden. Eine Bearbeitungsstation kann beispielsweise mit der Betätigungsvorrichtung ausgestattet und mit einer Vorrichtung zum Spannen von Werkstücken gekoppelt sein, um ein Entnehmen oder Einsetzen eines Werkstücks zu ermöglichen.

Bevorzugt kann vorgesehen sein, dass der Aktuator zum Erzeugen einer linearen Bewegung ausgebildet ist. Dies hat sich als vorteilhaft erwiesen, da der Aktuator gleichzeitig eine Zugkraft und eine Druckkraft erzeugt. Beide Kräfte sind aufgrund der linearen Bewegung bereits parallel zueinander ausgerichtet sind und somit gegenläufig.

Ebenfalls als bevorzugt hat sich herausgestellt, dass das wenigstens eine Zugglied und das wenigstens eine Druckglied parallel verschieblich zueinander geführt werden. Auf diese Weise ist eine außenreaktionskraftfreie oder außenreaktionskraftarme Einleitung der Zug- bzw. Druckkräfte möglich.

Der Aktuator kann nach wenigstens einem der folgenden Funktionsprinzipien betätigbar sein, nämlich pneumatisch, hydraulisch, magnetisch oder elektromechanisch. Eine pneumatische oder hydraulische Betätigung des Aktuators erweist sich im industriellen Umfeld als vorteilhaft, da bei großen Bearbeitungsanlagen in der Regel Anschlüsse für Druckluft oder Druckflüssigkeitsversorgungen vorhanden sind. Alternativ ist jedoch auch vorstellbar, dass der Aktuator magnetisch, beispielsweise in Form eines Elektromagneten oder elektromechanisch, beispielsweise in Form eines Spindeltriebs ausgebildet werden.

Bei pneumatischer oder hydraulischer Funktionsweise des Aktuators kann wenigstens ein Arbeitszylinder und wenigstens ein darin hydraulisch oder pneumatisch verschieblicher Arbeitskolben zum Erzeugen einer auf das wenigstens eine Zugglied und das wenigstens eine Druckglied wirkenden Relativbewegung vorgesehen sein. Die entsprechenden Kräfte und die damit einhergehenden Bewegungen können durch diese Ausgestaltung auf einfache Weise erzeugt werden, wobei gleichzeitig die an dem Zugglied und dem Druckglied anliegende Kraft sehr einfach über eine Einstellung des hydraulischen oder pneumatischen Druckes reguliert werden kann.

Gemäß einer bevorzugten Ausgestaltung der Erfindung kann vorgesehen sein, dass der Aktuator mit wenigstens zwei gegenläufig in einem Aktuatorgehäuse beweglichen Aktuatorgliedern ausgebildet ist, wobei das eine Aktuatorglied mit dem wenigstens einen Zugglied und das andere Aktuatorglied mit dem wenigstens einen Druckglied gekoppelt ist. Auf diese Weise kann erreicht werden, dass das Aktuatorgehäuse selbst bei Betätigung des Aktuators nur eine relativ kleine Bewegung auf ihrer schwimmenden Lagerung ausführen muss, wohingegen die mit den Aktuatorgliedern verbundenen Zug- und Druckglieder eine größere Bewegung durchlaufen können. Dadurch erfolgt das Einleiten der Kräfte in die andere Vorrichtung noch sanfter. Außerdem kann die Strecke, entlang welcher der Aktuator schwimmend gelagert sein muss, kleiner ausfallen.

Bevorzugt kann bei einer hydraulischen oder pneumatischen Betätigungsweise des Aktuators vorgesehen sein, dass die wenigstens zwei gegenläufig in dem Aktuator beweglichen Aktuatorglieder als Arbeitskolben ausgebildet sind, die beweglich in dem als Arbeitszylinder ausgebildeten oder den wenigstens einen Arbeitszylinder aufweisenden Aktuatorgehäuse geführt sind, wobei der eine Kolben mit dem wenigstens einen Zugglied und der andere Arbeitskolben mit dem wenigstens einen Druckglied gekoppelt ist. Auf diese Weise lässt sich ein einziger auf den Aktuator wirkender Arbeitsdruck dazu verwenden, beide Arbeitskolben gleichzeitig mit demselben Druck, also bei gleicher Kolbenfläche auch mit der gleichen Kraft zu betätigen, so dass die Ansteuerung der Betätigungsvorrichtung besonders einfach ausfällt. Bei einer Ausgestaltung des Aktuators als magnetischer Aktuator kann vorgesehen sein, dass die Aktuatorglieder beispielsweise als zwei gleichartige Elektromagneten ausgebildet sind, die mit einem gemeinsamen Weicheisenkern gekoppelt sind. Beispielsweise kann vorgesehen sein, dass die Spulen dieser Elektromagnete in Reihe geschaltet werden, so dass durch beide Spulen derselbe Strom fließt und somit bei gleicher Windungszahl dieselbe magnetische Kraft erzeugt wird.

Bei einer Ausgestaltung des Aktuators als elektromechanischer Spindeltrieb ist denkbar, den Spindeltrieb mit zwei Spindeln auszustatten, deren Gewindezüge gegensinnig zueinander ausgebildet sind, so dass eine Betätigung eines dazwischenliegenden Elektromotors gleichzeitig eine Zugkraft und eine Druckkraft erzeugt.

Bei einem hydraulisch oder pneumatisch betätigten Aktuator kann vorgesehen sein, die gleichen hydraulisch- oder pneumatisch wirksamen Kolbenflächen zur Erzeugung der Zugkraft und der Druckkraft vorzusehen. Auf diese Weise kann sichergestellt werden, dass die Zugkräfte den Druckkräften betragsmäßig entsprechen, so dass eine außenreaktionskraftfreie oder zumindest außenreaktionsarme Einleitung der Zug- und Druckkräfte gewährleistet ist.

In einer besonderen Ausgestaltung der Erfindung kann vorgesehen sein, dass der Aktuator zum Erreichen der schwimmenden Lagerung gegenüber einem Fundament linear verschieblich geführt ist, wobei das Fundament ortsfest gegenüber der Vorrichtung festgelegt ist. Dies hat sich als besonders vorteilhaft für die Verwendung der Betätigungsvorrichtung in einer Bearbeitungsanlage erwiesen, so dass eine Vorrichtung, in welche die Zug- bzw. Druckkräfte eingeleitet werden soll, nicht mit Kräften beaufschlagt wird, die zur Führung des Aktuators in seiner schwimmenden Lagerung dienen. Besonders bevorzugt kann dabei vorgesehen sein, dass der Aktuator mittels eines daran ausgebildeten oder damit verbundenen Führungsschlittens an einer Führungsschiene des Fundamentes gelagert ist.

In weitere Ausgestaltung der Erfindung kann vorgesehen sein, dass der Aktuator zur Erzeugung entgegengesetzter Relativbewegungen zwischen dem wenigstens einem Zugglied und dem wenigstens einen Druckglied doppelt wirkend oder mit wenigstens einer Rückzugsfeder ausgebildet ist. Auf diese Weise kann die Betätigungsvorrichtung nicht nur zum Einleiten einer Zugkraft über das Zugglied und einer Druckkraft über das Druckglied sondern auch zum Einleiten einer Druckkraft über das Zugglied und einer Zugkraft über das Druckglied verwendet werden. Dies erweist sich insbesondere dann als vorteilhaft, wenn die Vorrichtung, in die die Zug- bzw. Druckkräfte eingeleitet werden sollen, keine selbsttätige Rückstelleinrichtung aufweist. Die in den vorliegenden Beispielen beschriebene Vorrichtung zur Fixierung von Werkstücken könnte anstelle von federgetriebenen Spannmitteln nämlich auch Spannmittel aufweisen, die in unterschiedlichen Positionen positionier- und arretierbar sind, so dass eine entsprechende Betätigungsvorrichtung nicht nur eine Rückholkraft sondern auch eine entgegengesetzte Stellkraft zur exakten Positionierung der Spannmittel aufbringen muss. Ein doppeltwirkender Aktuator kann die entsprechenden Zug- bzw. Druckkräfte in beide Richtungen aktiv aufbringen, bei hydraulischen oder pneumatischen Aktuatoren beispielsweise dann, wenn Arbeitszylinder- oder Arbeitskolben doppeltwirkend ausgebildet sind.

In einer einfacheren Ausgestaltung kann alternativ auch vorgesehen sein, dass die Bewegungen der Betätigungsvorrichtung in einer Richtung durch eine Rückholfeder bewirkt wird, die so vorgespannt ist, dass sie die entgegengesetzten Druck- und Zugkräfte aufbringen kann. Durch angepasste Betätigung des Aktuators mit einer kleineren Gegenkraft, beispielsweise durch Beaufschlagung mit einem kleineren Hydraulik- bzw. Pneumatikdruck können die durch die Rückholfeder aufgebrachten Druck- und Zugkräfte an den Zug- und Druckgliedern eingestellt werden.

In diesem Zusammenhang hat sich das allgemeine Prinzip, das wenigstens eine Zugglied ferner zum Übertragen einer Druckkraft und/oder das wenigstens eine Druckglied ferner zum Übertragen einer Zugkraft auszubilden, als vorteilhaft erwiesen. Hierzu kann beispielsweise vorgesehen sein, dass das jeweilige Zug- bzw. Druckglied nicht nur an der Vorrichtung zum Einleiten einer Kraft zur Anlage kommt, sondern ggf. eine formschlüssige oder kraftschlüssige Verbindung mit der Vorrichtung eingeht, sodass Kräfte in beiden Richtungen übertragbar sind.

Außerdem hat sich als besonders vorteilhaft erwiesen, dass wenigstens zwei Zugglieder vorgesehen sind, die bezogen auf das wenigstens eine Druckglied diametral gegenüber liegen, oder dass wenigstens zwei Druckglieder vorgesehen sind, die sich bezogen auf das wenigstens eine Zugglied diametral gegenüber liegen, oder dass wenigstens zwei Zugglieder und wenigstens zwei Druckglieder vorgesehen sind, die symmetrisch zueinander angeordnet sind derart, dass die Einleitung der Zug- und Druckkräfte im Wesentlichen frei von Drehmomenten erfolgt.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Es zeigen in schematischer Darstellung:
- Fig. 1: in einer perspektivischen Ansicht eine Vorrichtung zur Fixierung von Werkstücken gemäß einer ersten Ausführungsform der Erfindung,
- Fig. 2: in einer perspektivischen Ansicht einen Teilausschnitt einer zweiten Ausführungsform der erfindungsgemäßen Vorrichtung zur Fixierung von Werkstücken,
- Fig. 3: eine perspektivische Rückansicht der Ausführungsform aus Fig. 2,
- Fig. 4: in einer perspektivischen Ansicht eine dritte Ausführungsform der erfindungsgemäßen Vorrichtung zur Fixierung von Werkstücken,
- Fig. 5: in einer perspektivischen Ansicht die erfindungsgemäße Vorrichtung gemäß Fig. 4 zur Fixierung von Werkstücken mit einer Rückholeinrichtung,
- Fig. 6: eine schematische Schnittansicht der erfindungsgemäßen Vorrichtung aus den Fig. 4 und 5,
- Fig. 7: eine perspektivische Ansicht einer vierten Ausführungsform der Erfindung,
- Fig. 8: eine Schnittdarstellung auf der Grundlage der Fig. 7,
- Fig. 9: eine Draufsicht auf die Vorrichtung nach den Fig. 7 und 8,
- Fig. 10: eine perspektivische Ansicht einer Überarbeitungsanlage mit einer erfindungsgemäßen Vorrichtung,
- Fig. 11.: eine perspektivische Unteransicht der Vorrichtung gemäß der ersten Ausführungsform der Erfindung und
- Fig. 12: eine perspektivische Ansicht einer nicht beanspruchten Betätigungsvorrichtung.

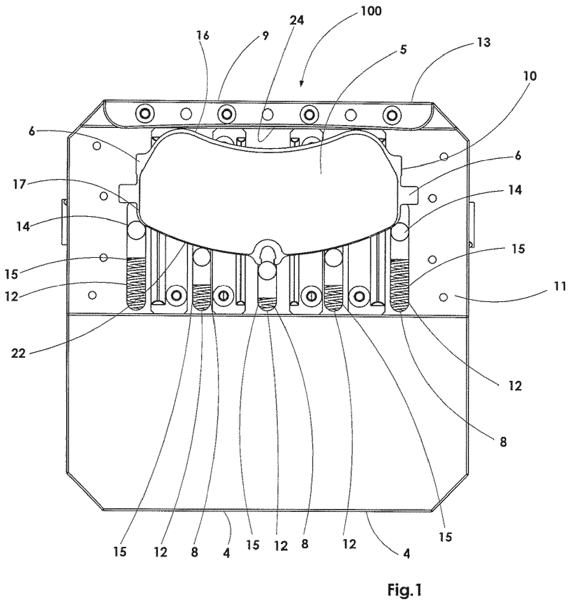

Fig. 1 zeigt eine Vorrichtung zur Fixierung von Werkstücken 10, die mit Bezugszeichen 100 versehen ist. Die Vorrichtung 100 dient dem Festspannen des Werkstücks 10. Bei dem Werkstück 10 handelt es sich beispielsweise um einen Bremsbelag, der eine Trägerplatte 6 und einen darauf befindlichen Reibbelag 5 aufweist sowie bogenförmig ausgebildet ist, d.h. er verfügt über zwei gegenüberliegende bogenförmige Seitenteile 16, 17 und zwei gegenüberliegende gerade Seitenteile.

Die Vorrichtung 100 umfasst eine Einspannauflage 11, die wie die übrigen Bestandteile der Vorrichtung 100 aus Metall gebildet ist. Die rechteckförmige Einspannauflage 11 ist eben ausgebildet und definiert den Bereich der Vorrichtung 100, auf dem das Werkstück 10 platzierbar und einspannbar ist. Innerhalb der Einspannauflage 11 sind Spannmittelführungen 12 ausgebildet, d.h. Längsöffnungen, die sich innerhalb der Einspannauflage 11 erstrecken. Die Spannmittelführungen 12 sind parallel und beabstandet zueinander angeordnet. Sie erstrecken sich über einen Teilbereich der Einspannauflage 11 und sind beabstandet zu einem Anschlag 13 angeordnet. Der Anschlag 13 erstreckt sich entlang der Stirnkante der Vorrichtung 100. Der Anschlag 13 hat die Form einer Leiste, d.h. eines geraden, schmalen, langen Bauteils, das auf der Vorrichtung 100 aufliegt und mit dieser fest oder lösbar verbunden ist. Der mit der Vorrichtung 100 verbundene Anschlag 13 ist mit der Vorrichtung 100 verschraubt, d.h. auswechselbar. Somit kann ein passender Anschlag 13 für unterschiedliche Werkstücktypen verwendet werden.

Wie aus Fig. 1 weiter hervorgeht, weist die Vorrichtung 100 Spannmittel 14 auf, die innerhalb der Spannmittelführungen 12 in Längsrichtung der Spannmittelführungen 12 verschiebbar und aus Metall gebildet sind. Die Spannmittel 14 erstrecken sich in ihrer Längsrichtung durch die Spannmittelführungen 12 und relativ zum Werkstück 10 nach oben, d. h. die Spannmittel 14 stehen von der Einspannauflage 11 vor und sind etwa zylinderförmig bzw. leicht konisch sowie einteilig ausgebildet. Die beiden Enden einer Spannmittelführung 12 weisen eine zu dem Spannmittel 14 korrespondierende Form auf, d.h. sie sind bogenförmig ausgebildet, wobei in Fig. 1 nur ein bogenförmiges Ende 8 zeichnerisch dargestellt ist. Unterhalb der Einspannauflage 11 erstrecken sich, wie Fig. 1 weiter verdeutlicht, in Längsrichtung der Spannmittelführungen 12 Federelemente 15, die an einem ihrer Enden mit den Spannmitteln 14 und mit ihrem anderen Ende mit der Seite der Vorrichtung 100 verbunden sind, die der Stirnseite 9 der Vorrichtung 100 d.h. der Seite der Vorrichtung 100, auf deren Bereich sich der Anschlag 13 befindet, gegenüberliegt.

Solange das Werkstück 10 noch nicht auf der Einspannauflage 11 aufliegt, befinden sich die Spannmittel 14 an dem bogenförmigen Ende der Spannmittelführungen 12, die dem Anschlag 13 gegenüberliegen, in einer Ruheposition. In der Ruheposition sind die Federelemente 15 unter Aufbau der Rückstellkraft maximal ausgelenkt. Um das Werkstück 10 auf der Einspannauflage 11 zu positionieren, werden die Spannmittel 14 freigegeben und bewegen sich unter der Einwirkung der Federkraft längs der Spannmittelführungen 12 in eine Spannposition. In der Spannposition legen sich die Spannmittel 14 an die Kontur des Werkstücks 10 an, sodass die Federelemente 15 sich teilweise entspannen und unter Federvorspannung an dem Werkstück zu liegen kommen. Hierbei speichern die Federelemente 15 Spannenergie in Form von potentieller Energie, deren Größe mit der Verkürzung oder der Verlängerung der Federelemente 15 steigt. Um eine zuverlässige Einspannung des Werkstückes 10 zu gewährleisten kann vorgesehen sein, dass die Federelemente 15 unter Dauervorspannung stehen, also mit einer vorgegebenen Kraft vorgespannt sind, die selbst dann anliegt, wenn die Spannmittel 14 sich in der dem Anschlag 13 nächstliegenden Stellung befinden.

In der in Fig. 1 dargestellten Ausführungsform der Erfindung liegen die Spannmittel 14 in der Spannposition aufgrund ihrer Zylinderform tangential an der Kontur des Werkstücks 10 an.

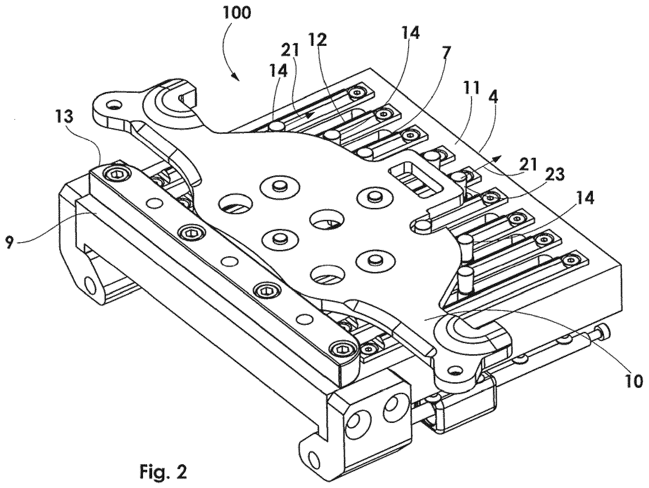

Fig. 2 zeigt eine weitere Variante der Anordnung der Federelemente 15 unterhalb der Einspannauflage 11 der Vorrichtung 100. Bei dieser Ausführungsform sind als Zugfeder ausgebildete Federelemente 15 vorgesehen, die an einem ihrer Enden mit den Spannmitteln 14 und mit ihrem anderen Ende an der Stirnseite 9 der Vorrichtung 100 festgelegt sind. Auch bei dieser Ausführungsform befinden sich die Spannmittel 14 an einem ersten, in Fig. 2 nicht gezeigten und unter dem Werkstück 10 befindlichen bogenförmigen Ende der Spannmittelführungen 12, die dem Anschlag 13 gegenüberliegen, in einer Ruheposition, solange das Werkstück 10 noch nicht auf der Einspannauflage 11 aufliegt. Die Spanmittelführung 12 wird durch ein zweites bogenförmiges Ende 7 begrenzt, das dem ersten in Fig. 2 nicht dargestellten bogenförmigen Ende gegenüberliegt und der gegenüberliegenden Seite 4, d.h. der Rückseite der Vorrichtung 100 zugewandt ist.

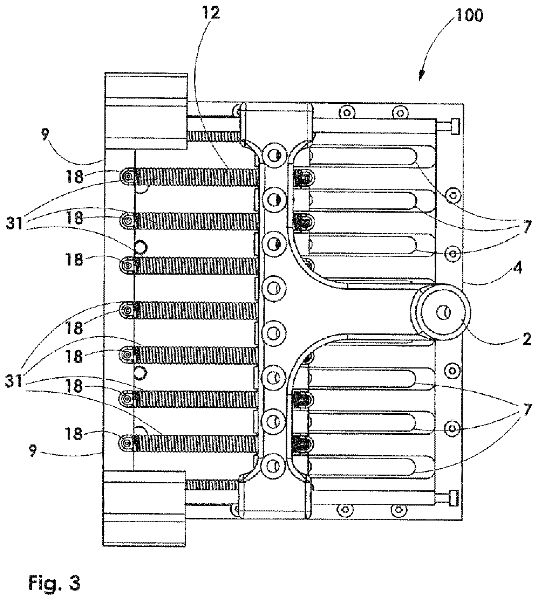

Dies veranschaulicht genauer Fig. 3, die eine mit Befestigungsmitteln 18 versehenen Rückseite der in Fig. 2 dargestellten Vorrichtung 100 zeigt. Die Federelemente 15 sind, wie aus Fig. 3 hervorgeht, zwischen der Stirnseite 9 der Vorrichtung 100 und den in Fig. 3 nicht sichtbaren Spannmitteln 14 angeordnet, d.h. auch mit der Stirnseite 9 und den Spannmitteln 14 fest verbunden.

Um das in Fig. 2 gezeigte Werkstück 10 auf der Einspannvorlage 11 zu positionieren, werden die Spannmittel 14 durch Einwirkung einer äußeren Kraft längs der Spannmittelführungen 12 verschoben, sodass die in Fig. 3 gezeigten Federelemente 15 auseinandergezogen, d.h. verlängert werden, was in Fig. 2 durch den Pfeil 21 veranschaulicht ist. Hierdurch speichern die in Fig. 3 gezeigten und als Zugfedern ausgebildeten Federelemente 15 potentielle Energie, deren Betrag mit der Verlängerung bzw. Verkürzung der Federelemente 15 steigt oder fällt. Das Werkstück 10 wird somit durch die daran anliegenden Spannmittel 12 gegen den Anschlag 13 gedrückt und so gegen Verschiebungen in der Ebene der Einspannauflage 11 gesichert. Auch bei der in Fig. 2 dargestellte Ausführungsform der Erfindung legen sich die Spannmittel 14 in der Spannposition aufgrund ihrer runden Form tangential an die Kontur des Werkstücks 10 an.

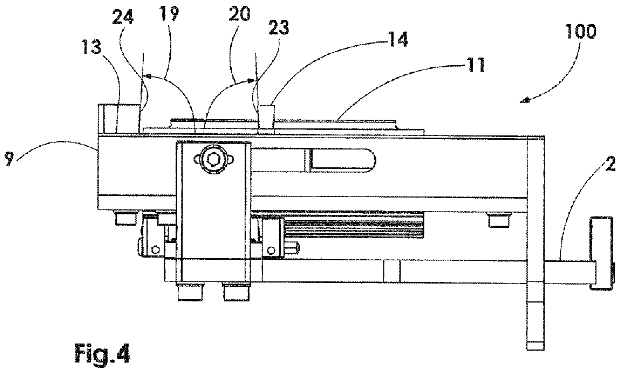

Um das Werkstück 10 stärker auf die Einspannauflage 11 zu spannen, ist die zum Anschlag 13 zugewandte Außenfläche des Spannmittels 14, wie Fig. 4 verdeutlicht, schräg ausgebildet ist. Bei der in Fig. 4 gezeigten Ausführungsform liegt noch kein Werkstück auf der Einspannauflage 11, d.h. das Spannmittel 14 befindet sich in einer Ruheposition. Der zwischen der schrägen Außenfläche des Spannmittels 12 und der Einspannauflage 11 eingeschlossene Winkel 20 beträgt ca. 87°.

Gegenüber den Spannmitteln 14 ist der Anschlag 13 angeordnet. Dieser weist eine den Spannmitteln 14 zugewandte schräge Außenfläche auf und schließt mit der Einspannauflage 11 einen Winkel 19 ein, der etwa 87° beträgt. Hierdurch wird das Werkstück 10 noch stärker auf die Einspannauflage 11 gespannt.

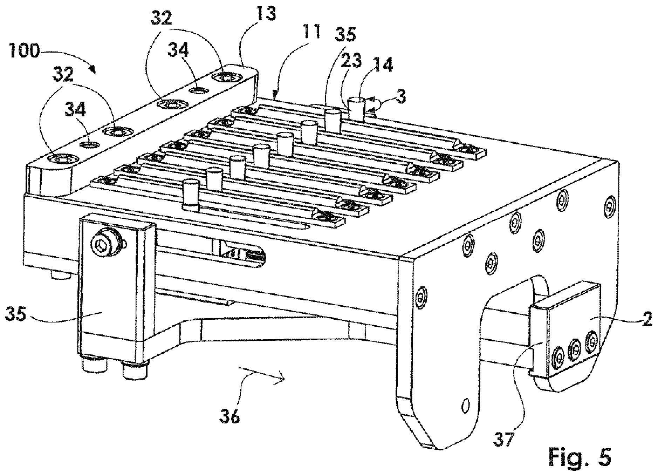

In der Fig. 5 ist die Vorrichtung 100 gemäß der dritten Ausführungsform in einer Perspektivansicht gezeigt. Die als Spannstifte ausgebildeten Spannmittel 14 sind auswechselbar an der Vorrichtung 100 vorgesehen und können vorliegend ausgetauscht werden. Die Spannmittel 14 sind dazu mit einer darunter liegenden, beweglichen Einheit verschraubt. Durch einfaches Angreifen an der Spannfläche 23 und Drehen an dem Spannmittel 14 kann dieses von der Vorrichtung 100 abgelöst und durch ein anderes Spannmittel 14 ersetzt werden.

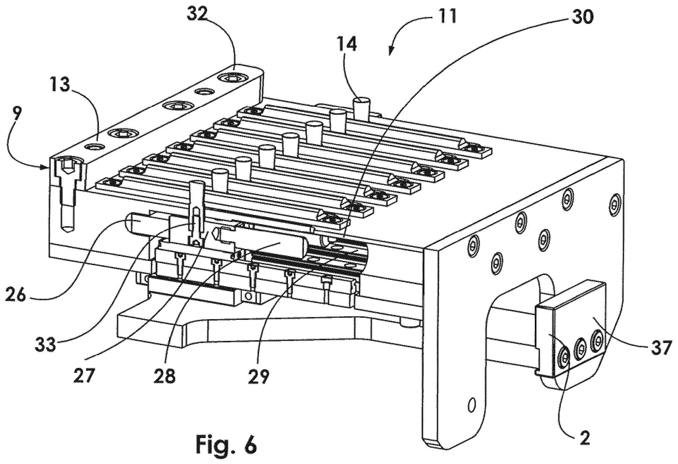

In der Fig. 6 ist eine Schnittansicht der Vorrichtung aus den Fig. 4 und 5 gezeigt, in welcher die unterhalb der Einspannauflage 11 liegende, bewegliche Einheit darstellt ist. Diese Einheit weist ein Verbindungsteil 27 mit einem Gewindebolzenfortsatz 33 auf, auf weichen das mit einem Innengewinde versehene Spannmittel 14 aufgeschraubt ist. Das Verbindungsteil 27 bildet einen Teil eines Führungswagens 26, der unterhalb der Einspannauflage 11 längsverschieblich in der Vorrichtung vorgesehen ist. Der Führungswagen 26 weist einen mit dem Verbindungsteil 27 verbundenen Innendorn 28 auf, der in ein in der Fig. 6 nicht gezeigtes Federelement 15 eintaucht. Das Federelement 15 wird in einer Einbauposition 30 innerhalb einer länglichen Führungstasche 29 positioniert. Durch den Innendorn 28 wird ein seitliches Wegknicken des Federelementes 15 bei Belastung vermindert bzw. nahezu vermieden.

Auf der Einspannauflage 11 ist stirnseitig der Anschlag 13 mittels Gewindebolzen 32 mit der Einspannauflage 11 verschraubt. Zusätzlich können an dem Anschlag 13 Bohrungen vorgesehen sein, in welche Stifte 34 zur Ausrichtung des Anschlags 13 mit der Einspannauflage 11 eingreifen.

Zum Zurücksetzen der Spannmittel 14 in die Ruheposition ist ein Auslöser 2 vorgesehen, welcher mit den Spannmitteln 14 gleichlaufend längsverschieblich an der Vorrichtung 100 vorgesehen ist. Der Auslöser 2 weist dabei zwei seitlich die Einspannauflage 11 umgreifende Backen 35 auf, zwischen denen ein in den Figuren nicht gezeigtes Rückholelement eingefügt ist, das an den Verbindungsteilen 27 der jeweiligen Spannmitteln 14 angreift, wenn die Rückholeinrichtung 25 in die Rückholrichtung 36 gezogen wird. Zur Einleitung einer Zugkraft in den Auslöser 2 ist eine Rückholbacke 37 vorgesehen, in welche eine Rückholeinrichtung 25 einer Bearbeitungsanlage 200 eingreifen kann, in welcher die Vorrichtung 100 verwendet wird.

Generell wird in den in Fig. 2 bis 6 dargestellten Auslöser 2 eine Zugkraft eingeleitet, um die Spannmittel 14 aus ihrer jeweiligen Spannposition zurückzuholen.

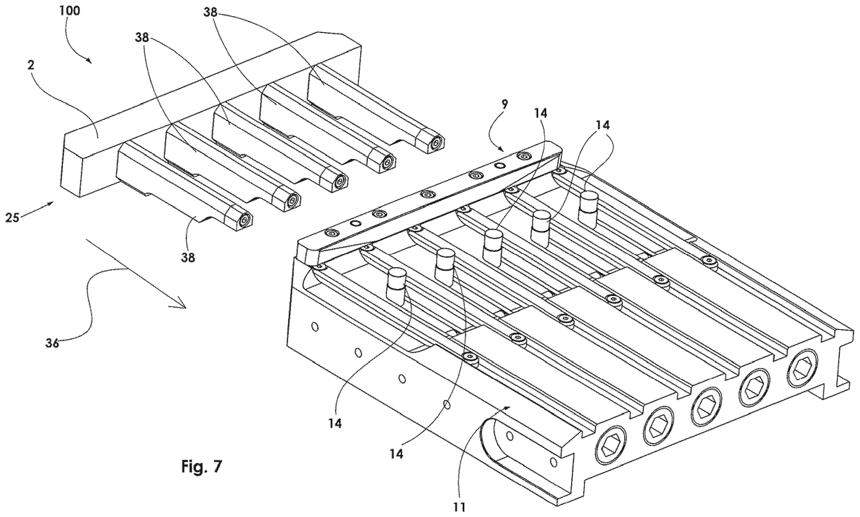

In der Fig. 7 ist eine vierte Ausführungsform der Erfindung gezeigt, bei welcher der Auslöser 2 im Gegensatz zu den zuvor beschriebenen Ausführungsformen keine Zugkraft sondern eine Druckkraft mittelbar oder unmittelbar auf die jeweiligen Spannmittel 14 ausübt, wenn er in Rückholrichtung 36 bewegt wird. Hierdurch werden die Spannmittel 14 aus ihrer jeweiligen Spannposition in die Ruheposition zurückgeholt. Dazu weist der in der Fig. 7 dargestellte Auslöser 2 mehrere Rückholfinger 38 auf, die an der Stirnseite 9 der Vorrichtung 100 an den jeweiligen Führungswagen 26 angreifen.

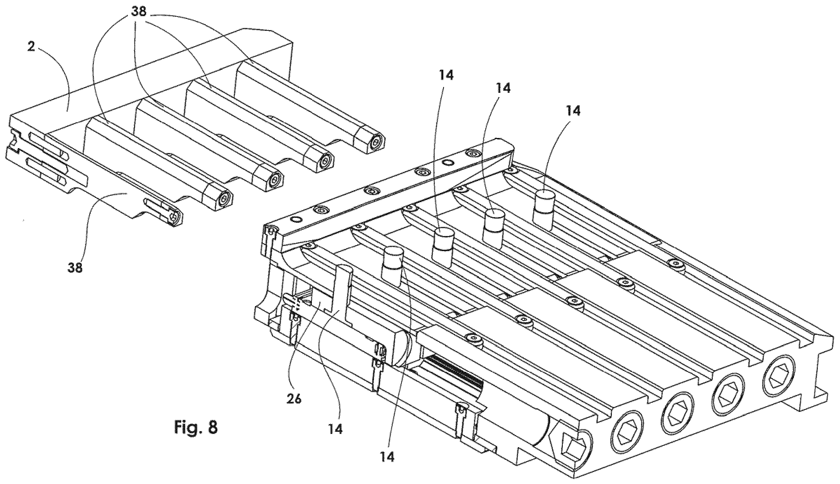

In der Fig. 8 ist eine Schnittansicht der Vorrichtung gemäß Fig. 7 gezeigt, in der das Zusammenspiel zwischen dem jeweiligen Finger 38 und dem zugehörigen Führungswagen 26 erkennbar ist.

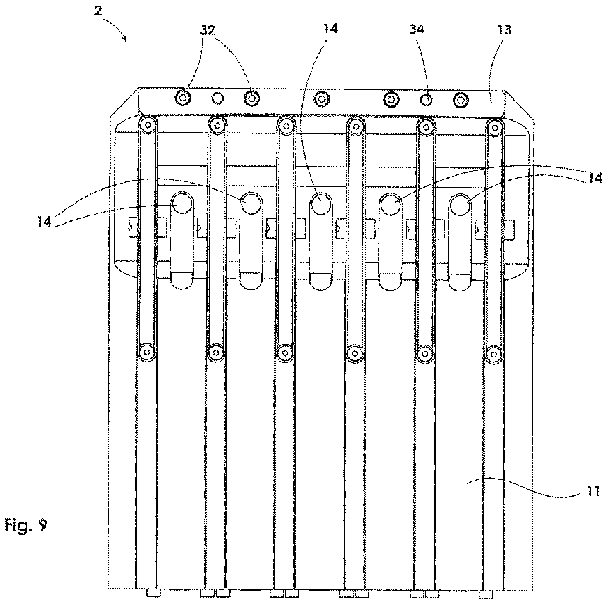

Wie in den Fig. 7 bis 9 erkennbar, kann gemäß der vierten Ausführungsform auf seitlich oder stirnseitig überstehende Abschnitte eines Auslösers 2 verzichtet werden. Vielmehr ist der Auslöser 2 Teil eines separat zu der Vorrichtung 100 ausgebildeten Rückholmechanismus 25, welcher nur bedarfsweise und an bestimmten Stellen ein Bearbeitungsanlage 200, beispielsweise vor oder nach Bearbeitungsstationen 201 angeordnet ist. Somit besteht die Vorrichtung gemäß der vierten Ausführungsform aus weniger Bauteilen als die übrigen Ausführungsformen.

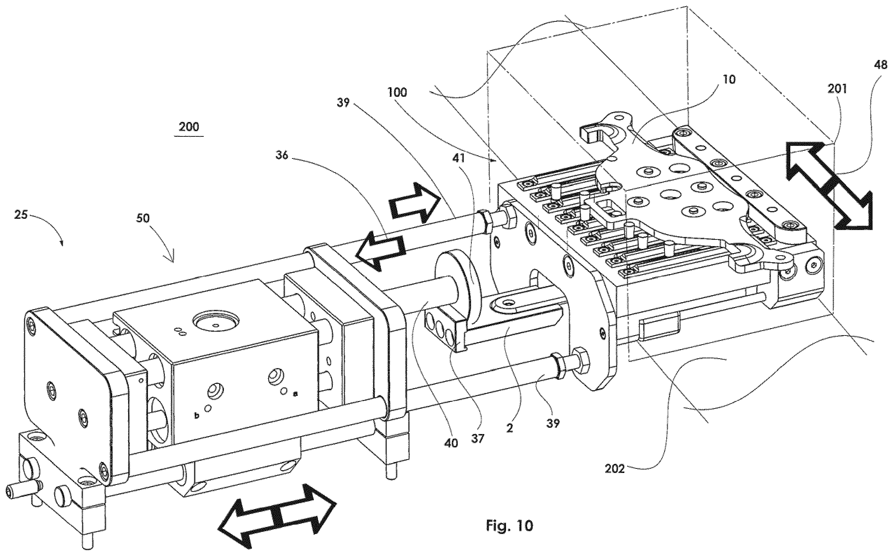

In der Fig. 10 ist die bereits zuvor erwähnte Bearbeitungsanlage 200 mit einer Bearbeitungsstation 201 schematisch dargestellt. Die Bearbeitungsstation 201 kann beispielsweise eine Schleifbearbeitungsstation sein, die Teil einer Produktionsstraße bildet. Die einzelnen Vorrichtungen 100 zur Fixierung von Werkstücken 10 für die Bearbeitung in den Bearbeitungsstationen 201 werden mittels einer Transporteinrichtung 202 zu den jeweiligen Bearbeitungsstationen 201 gefördert.

Im vorliegenden Beispiel gemäß Fig. 10 ist die Bearbeitungsstation 201 eine Entnahmestation, in welcher das fertiggestellte Werkstück 10, vorliegend eine Belagträgerplatte, aus der Vorrichtung 100 entnommen werden soll. Dazu muss die Fixierung des Werkstückes 10 gelöst werden, in dem die jeweiligen Spannmittel 14 aus ihrer jeweiligen Spannposition in die Ruheposition zurückgeholt werden, so dass das Werkstück 10 freigegeben wird.

Der Auslöser 2 der Vorrichtung 100 wird dazu mit Hilfe einer Rückholeinrichtung 25 in Form einer Betätigungsvorrichtung 49 in die Rückholrichtung 36 bewegt. Dies muss mit einer relativ großen Rückholkraft in Rückholrichtung 36 geschehen, die größer ist als die Summe der Federkräfte der einzelnen Federelemente 15. Die Rückholeinrichtung 25 weist Druckglieder 52 in Form von Stützstempeln 39 auf, die die Vorrichtung 100 gegen die über den Auslöser 2 als Zugkraft 53 eingeleitete Rückholkraft abstützen. An dem Auslöser 2 greift ein Rückholstempel 40 an, der mit einer tellerförmigen Aufweitung 41 die Rückholbacke 37 hintergreift. Der Rückholstempel 40 ist gleichzeitig ein Zugglied 51 der Betätigungsvorrichtung 49 und ist mit einem die Rückholkraft aufbringenden Aktuator 50 verbunden.

Wenn die Vorrichtung 100 mittels der Transporteinrichtung 202 in Transportrichtung 48 in die Bearbeitungsstation 201 gefahren wird, kommen die Rückholbacke 37 und die Aufweitung 41 in der Rückholrichtung 36 in Deckung, so dass ein einfaches Zurückziehen des Rückholstempels 40 in die Rückholrichtung 36 eine Mitnahme des Auslösers 2 bewirken.

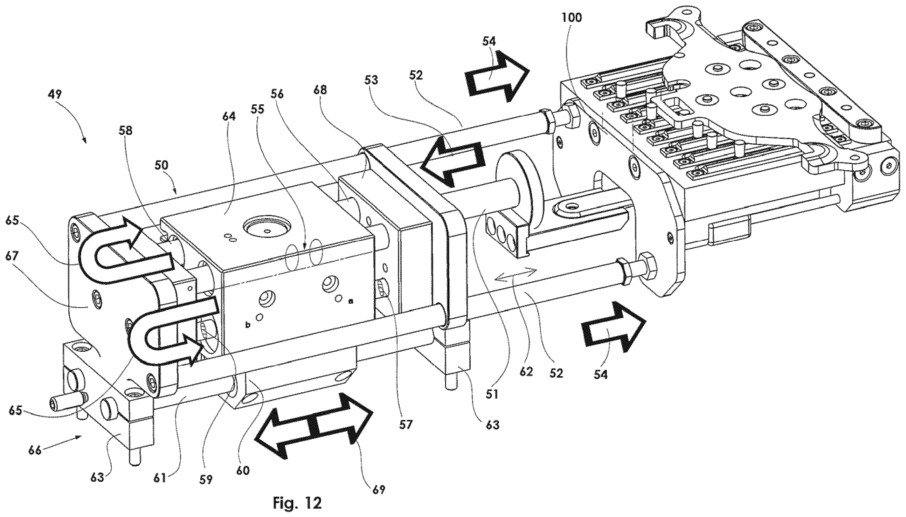

In der Fig. 12 ist die Betätigungsvorrichtung 49 dargestellt, die die in Fig. 10 dargestellte Rückholeinrichtung 25 bildet. Die Betätigungsvorrichtung 49 weist einen Aktuator 50 auf, der ein im vorliegenden ein Fall zentral angeordnetes Zugglied 51 und zwei bezogen auf das Zugglied 51, diametral gegenüberliegende Druckglieder 52 aufweist. Das Zugglied 51 dient zum Einleiten einer Zugkraft 53 in die Vorrichtung 100. Die Druckglieder 52 stützen in entgegengesetzter Richtung die Betätigungsvorrichtung 49 mit einer Druckkraft an der Vorrichtung 100 ab, so dass die Einleitung der Zugkraft 53 und der Druckkräfte 54 sich im Wesentlichen aufhebt. Hierdurch bleibt die Vorrichtung 100 im Wesentlichen außenreaktionskraftfrei.

Der Aktuator 50 weist mehrere Arbeitszylinder 55 auf, in denen mehrere Arbeitskolben 56, 58 verschieblich geführt sind. Dabei dienen im vorliegenden Fall die Arbeitskolben 56 zum Aufbringen der Zugkraft 53 auf die Vorrichtung 100 und die Arbeitskolben 58 zum Aufbringen der Druckkraft 54 auf die Vorrichtung 100. Im vorliegenden Fall sind die Arbeitskolben 56, 58 jeweils in demselben Arbeitszylinder 55 mit identischer Kolbenfläche 57, 59 geführt, so dass eine Beaufschlagung des Arbeitszylinders 55 mit einem definierten pneumatischen oder hydraulischen Druck zu einer gleichzeitigen Beaufschlagung der jeweiligen Arbeitskolben 56, 58 mit der gleichen Kraft erfolgt. Die Arbeitskolben 56, 58 bewegen sich dabei gegensinnig in den Arbeitszylinder 55 hinein, so dass je eine mit den Arbeitskolben 56, 58 verbundene Kraftübertragungsplatte 67, 68 sich zu dem dazwischen angeordneten Aktuatorgehäuse 64 hinbewegt. Die Kraftübertragungsplatten 67, 68 sind jeweils mit den Zug- bzw. Druckgliedern 51, 52 verbunden, so dass die auf die Kraftübertragungsplatte 67 ausgeübte Zugbewegung zu einer Bewegung des Druckglieds 52 in Richtung der Vorrichtung 100 führt. In diesem Sinne ist die Kraftübertragungsplatte 67 derart ausgebildet, dass die auf sie übertragene Zugkraft 65 in eine mit dem Druckglied 52 übertragene Druckkraft umgelenkt wird.

Der Aktuator 50 erzeugt somit eine Relativbewegung 62 zwischen dem Zugglied 51 und dem Druckglied 52, die mittels eines Doppelpfeils angedeutet ist. Bei der Ausführung dieser Relativbewegung 62 kommt es vor, dass das Zugglied 51 oder das Druckglied 52 zuerst an der Vorrichtung 100 zur Anlage kommt, so dass der Aktuator 50 eine Ausgleichsbewegung 69 ausführen muss, um eine einseitige Einleitung einer Zug- oder Druckkraft in die Vorrichtung 100 zu vermeiden. Dazu weist der Aktuator 50 einen Führungsschlitten 60 auf, der einen Teil des Aktuatorgehäuses 64 bildet oder damit verbunden ist. Der Führungsschlitten 60 ist auf Führungsschienen 61 linear beweglich gelagert und kann auf den Führungsschienen 61 zwischen endseitig montieren Klemmstücken 63 verfahren. Die Klemmstücke 63 bilden ein ortsfest vorgesehenes Fundament 66.

Der hier zum Erzeugen einer Linearbewegung ausgebildete Aktuator 50 kann alternativ auch als magnetisch betätigbarer oder elektromechanisch betätigbarer Aktuator ausgebildet sein. Beispielsweise können die Arbeitskolben 56, 58 mit zwei gleichartigen Elektromagneten, d. h. mit gleicher Windungszahl ausgestatteten Elektromagneten verbunden sein, die auf einen gemeinsamen Weicheisenkern bewegbar sind, so dass die Arbeitskolben 56, 58 dann als Aktuatorglieder die jeweilige Zug- oder Druckkraft aufbringen.

Auch kann der Aktuator 50 als elektromechanischer Spindeltrieb ausgebildet sein, wobei die Aktuatorglieder hier als gegensinnig gewundene Spindelstangen ausgebildet sein können, so dass ein zentral in dem Aktuatorgehäuse 56 angeordneter Motor eine gegensinnige Bewegung an den Spindelabgriffen erzeugt.

Bei allen Varianten der Aktuatoren kann vorgesehen sein, dass diese doppelwirkend, also zum Erzeugen sowohl von Zug- als auch von entgegengesetzten Druckkräften in beiden Richtungen wechselweise ausgebildet sind, so dass nicht nur eine im Zusammenhang mit der hier beschriebenen Vorrichtung 100 erforderliche Rückholbewegung für die Spannmittel 14 sondern auch eine entgegengesetzte Betätigung erfolgen kann.

Insgesamt kann die Betätigungsvorrichtung 49 zum außenreaktionskraftfreien oder außenreaktionskraftarmen Einleiten von Zug- bzw. Druckkräften in andere Vorrichtungen für eine Vielzahl unterschiedlicher Anwendungen verwendet werden. Als besonders vorteilhaft hat sich die Betätigungsvorrichtung 49 für die Anwendung bei der Bremsbelag-Herstellung erwiesen.

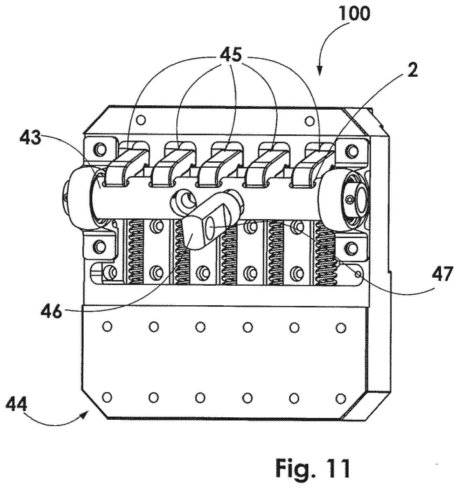

Schließlich wird in der Fig. 11 die perspektivische Unteransicht der Vorrichtung 100 gemäß einer Variante nach der ersten Ausführungsform gezeigt, bei welcher der Auslöser 2 kurbelwellenartig ausgebildet ist. Hierbei ist eine drehbare Welle 43 an der der Einspannauflage 11 gegenüberliegenden Unterseite 44 der Vorrichtung 100 vorgesehen, welche mit jeweils einem Pleuel 45 an dem jeweiligen Führungswagen 26 des jeweiligen Spannmittels 14 angreift. Ein Betätigungshebel 46 ist drehfest mit der Welle 43 verbunden und weist eine Verbindungsbohrung 47 auf, mittels welcher er mit einem Aktuator 50 verbindbar ist. Die vorliegende Ausgestaltung des Auslösers 2 ermöglicht es, eine Unter- bzw. Übersetzung der Rückholbewegung gegenüber der Spannmittel 14 aus ihrer jeweiligen Spannposition heraus zu bewirken, so dass bei Bedarf entweder mit kleinen Betätigungshüben für die Rückholeinrichtung 25 oder kleinen Rückholkräften die Fixierung gelöst werden kann.

### Bezugszeichenliste

- 1: Bremsbelag
- 2: Rückholeinrichtung
- 3: Drehrichtung
- 4: gegenüberliegende Seite
- 5: Reibbelag
- 6: Trägerplatte
- 7: bogenförmiges Ende
- 8: bogenförmiges Ende
- 9: Stirnseite
- 10: Werkstück
- 11: Einspannauflage
- 12: Spannmittelführung
- 13: Anschlag
- 14: Spannmittel
- 15: Federelement
- 16: bogenförmiges Seitenteil
- 17: bogenförmiges Seitenteil
- 18: Befestigungsmittel
- 19: Winkel
- 20: Winkel
- 21: Pfeil
- 22: Werkstückkontur
- 23: Spannfläche
- 24: Anschlagsfläche
- 25: Rückholeinrichtung
- 26: Führungswagen
- 27: Verbindungsteil
- 28: Innendorn
- 29: Führungstasche
- 30: Einbauposition
- 31: Federelement
- 32: Gewindebolzen
- 33: Gewindebolzenfortsatz
- 34: Stift
- 35: Backe
- 36: Rückholrichtung
- 37: Rückholbacke
- 38: Rückholfinger
- 39: Stützstempel
- 40: Rückholstempel
- 41: Aufweitung
- 43: Welle
- 44: Unterseite
- 45: Pleuel
- 46: Betätigungshebel
- 47: Verbindungsbohrung
- 48: Transportrichtung
- 49: Betätigungsvorrichtung
- 50: Aktuator
- 51: Zugglied
- 52: Druckglied
- 53: Zugkraft
- 54: Druckkraft
- 55: Arbeitszylinder
- 56: Arbeitskolben, Zugkraft
- 57: Kolbenfläche
- 58: Arbeitskolben, Druckkraft
- 59: Kolbenfläche
- 60: Führungsschlitten
- 61: Führungsschiene
- 62: Relativbewegung
- 63: Klemmstück
- 64: Aktuatorgehäuse
- 65: Zugkraft
- 66: Fundament
- 67: Kraftübertragungsplatte
- 68: Kraftübertragungsplatte
- 69: Ausgleichsbewegung

- 100: Vorrichtung

- 200: Bearbeitungsanlage
- 201: Bearbeitungsstation
- 202: Transporteinrichtung

## Patentansprüche

1. Vorrichtung (100) zur Fixierung von Werkstücken (10), mit wenigstens einem Anschlag (13) und mit wenigstens zwei Spannmitteln (14), die jeweils aus einer Ruheposition in Richtung zu einer durch die Werkstückkontur (22) vorgegebenen Spannposition verschiebbar sind, wobei eine Einspannauflage (11) für das einzuspannende Werkstück (10) vorgesehen ist und die Spannmittel (14) jeweils federgetrieben in ihre Spannpositionen verfahrbar sind, in welcher das auf der Einspannauflage (11) aufliegende Werkstück (10) mittels der Spannmittel (14) gegen den Anschlag (13) spannbar ist, wobei die Spannmittel (14) jeweils in einer Spannmittelführung (12) entlang der Einspannauflage (11) beweglich geführt sind, wobei die Spannmittel (14) jeweils ein in Richtung der Spannposition wirkendes Federelement (15) aufweisen, wobei die Spannmittel (14) von der Einspannauflage (11) vorstehen, und wobei die Spannmittel (14) jeweils mit einem Verbindungsteil (27) verbunden sind, das mit dem jeweiligen Federelement (15) mechanisch verbunden ist, **dadurch gekennzeichnet, dass** die jeweilige Spannmittelführung (12) in die Einspannauflage (11) eingelassen ist, und dass das jeweilige Federelement (15) in einer Führungstasche (29) unterhalb der Einspannauflage (11) gehalten ist und sich einerseits am Boden der Führungstasche (29) und andererseits an dem jeweiligen Verbindungsteil (27) abstützt.

2. Vorrichtung nach Anspruch 1, **dadurch gekennzeichnet, dass** wenigstens eines der Federelemente (15) als Zugfeder ausgebildet ist, die vorzugsweise zwischen einer mit dem Anschlag (13) versehenen Stirnseite (9) der Vorrichtung (100) und dem Spannmittel (14) eingespannt ist, und/oder, dass wenigstens eines der Federelemente (15) als Druckfeder ausgebildet ist, die vorzugsweise zwischen einer dem Anschlag (13) gegenüberliegenden Seite (4) der Vorrichtung (100) und dem Spannmittel (14) eingespannt ist.

3. Vorrichtung nach einem der vorhergehenden Ansprüche, **dadurch gekennzeichnet, dass** die Spannmittel (14) sich in ihrer Längsrichtung quer zur Einspannauflage (11) erstrecken.

4. Vorrichtung nach einem der vorhergehenden Ansprüche, **dadurch gekennzeichnet, dass** wenigstens eines der Spannmittel (14) und/oder der Anschlag (13) zum Niederhalten des Werkstücks (10) auf die Einspannauflage (11) ausgebildet ist bzw. sind, wobei eine an dem Werkstück (10) angreifenden Spannfläche (23) oder Anschlagsfläche (24) vorzugsweise schräg ausgebildet und zur Einspannauflage (11) geneigt ist bzw. sind.

5. Vorrichtung nach Anspruch 4, **dadurch gekennzeichnet, dass** der eingeschlossene Winkel (20) zwischen der Spannfläche (23) bzw. der Anschlagsfläche (24) und der Einspannauflage (11) zwischen 85° und 89°, bevorzugt 87° beträgt.

6. Vorrichtung nach einem der vorhergehenden Ansprüche, **dadurch gekennzeichnet, dass** das Spannmittel (14) und/oder der Anschlag (13) lösbar an der Vorrichtung vorgesehen ist bzw. sind.

7. Vorrichtung nach einem der vorhergehenden Ansprüche, **dadurch gekennzeichnet, dass** wenigstens zwei der Spannelementführungen (12) etwa parallel zueinander verlaufen.

8. Vorrichtung nach einem der vorhergehenden Ansprüche, **dadurch gekennzeichnet, dass** die Spannmittel (14) für ein Verschieben entgegen der in Richtung der Spannposition wirkenden Federkraft mit einer Rückholeinrichtung (25) koppelbar sind.

9. Vorrichtung nach einem der vorhergehenden Ansprüche, **dadurch gekennzeichnet, dass** wenigstens eines Spannmittel (14) eine konvex ausgebildete Spannfläche (23) zum Angreifen an dem Werkstück (1) aufweist.

10. Bearbeitungsanlage (200) mit einer Vorrichtung (100) nach einem der vorhergehenden Ansprüche.

11. Bearbeitungsanlage (200) nach Anspruch 10, **dadurch gekennzeichnet, dass** wenigstens eine Bearbeitungsstation (201) zum mechanischen Bearbeiten eines in der Vorrichtung (100) gehaltenen Werkstücks (10) vorgesehen ist, in die die Vorrichtung (100) mittels einer Transporteinrichtung (202) zu- und abführbar ist.

12. Bearbeitungsanlage (200) nach einem der Ansprüche 10 oder 11, **dadurch gekennzeichnet, dass** die Bearbeitungsanlage (200) eine Rückholeinrichtung (25) für ein Verschieben der Spannmittel (14) zur Ruheposition aufweist, wobei die Rückholeinrichtung (25) durch eine Betätigungsvorrichtung (49) gebildet ist, wobei die Betätigungsvorrichtung (49) zum Einleiten einer Zugkraft (53) und einer entgegengesetzten Druckkraft (54) in die Vorrichtung (100) ausgebildet ist und wenigstens ein Zugglied (51) zum Übertragen der Zugkraft (53) auf die Vorrichtung (100) und wenigstens ein Druckglied (52) zum Übertragen der Druckkraft (54) auf die Vorrichtung (100) aufweist, wobei das wenigstens eine Zugglied (51) und das wenigstens eine Druckglied (52) zur Erzeugung einer Relativbewegung (62) über einen dazwischen schwimmend gelagerten Aktuator (50) wirkverbunden sind.

## Claims

1. Device (100) for positioning workpieces (10), having at least one stop (13) and having at least two clamps (14) which can each be moved from a rest position in the direction of a clamping position predetermined by the workpiece contour (22), in which a clamping support (11) is provided for the workpiece (10) to be clamped, and the clamps (14) can each be moved into their clamping positions by means of springs, in which the workpiece (10) located on the clamping support (11) can be clamped against the stop (13) by means of the clamps (14), in which the clamps (14) are each movably guided in a clamp guide (12) along the clamping support (11), in which the clamps (14) each have a spring element (15) operating in the direction of the clamping position, in which the clamps (14) each protrude from the clamping support (11), and in which the clamps (14) each being joined to a connecting part (27) which is mechanically joined to the respective spring element (15), **characterised in that** the respective clamp guide (12) is inserted into the clamping support (11), and **in that** the respective spring element (15) is housed in a guiding pocket (29) below the clamping support (11) and is supported on the one side by the base of the guiding pocket (29) and on the other hand by the respective connecting part (27).

2. Device according to Claim 1, **characterised in that** at least one of the spring elements (15) is designed as a tension spring, which is preferably clamped between a front side (9) of the device (100) provided with the stop (13) and the clamps (14), and/or **in that** at least one of the spring elements (15) is designed as a compression spring, which is preferably clamped between one side (4) of the device (100) opposite the stop (13) and the clamps (14).

3. Device according to any one of the preceding claims, **characterised in that** the clamps (14) extend in their longitudinal direction transversely to the clamping support (11).

4. Device according to any one of the preceding claims, **characterised in that** at least one of the clamps (14) and/or the stop (13) is/are designed to hold down the workpiece (10) on the clamping support (11), in which a clamping surface (23) and/or stop surface (24) engaging the workpiece (10) is/are preferably set at an oblique angle and sloped towards the clamping support (11).

5. Device according to Claim 4, **characterised in that** the included angle (20) between the clamping surface (23) and/or the stop surface (24) and the clamping support (11) is between 85° and 89°, preferably 87°.

6. Device according to any one of the preceding claims, **characterised in that** the clamps (14) and/or the stop (13) can be freely detached from the device.

7. Device according to any one of the preceding claims, **characterised in that** at least two of the clamping element guides (12) move approximately parallel to one another.

8. Device according to any one of the preceding claims, **characterised in that** the clamps (14) are couplable to a return device (25) for any movement against the spring force operating in the direction of the clamping position.

9. Device according to any one of the preceding claims, **characterised in that** at least one clamp (14) has a convex clamping surface (23) for engaging the workpiece (1).

10. Machining facility (200) with a device (100) according to any one of the preceding claims.

11. Machining facility (200) according to Claim 10, **characterised in that** at least one machining station (201) is provided for mechanically machining a workpiece (10) housed in the device (100), into which the device (100) can be fed and removed by means of a transport device (202).

12. Machining facility (200) according to any one of Claims 10 or 11, **characterised in that** the machining facility (200) has a return device (25) for moving the clamps (14) to the rest position, in which the return device (25) comprises an actuator (49), in which the actuator (49) is designed for introducing a tractive force (53) and an opposite compressive force (54) into the device (100) and has at least one tension member (51) for transmitting the tractive force (53) to the device (100) and at least one compression member (52) for transmitting the compressive force (54) to the device (100), in which at least one tension member (51) and at least one compression member (52) are functionally connected via an actuator (50) floating in between in order to produce a relative movement (62).

## Revendications

1. Dispositif (100) permettant de fixer des pièces à usiner (10), avec au moins une butée (13) et avec au moins deux moyens de serrage (14) qui peuvent être déplacés chacun d'une position de repos en direction d'une position de serrage prédéfinie par le contour de la pièce à usiner (22), un support de serrage (11) étant prévu pour la pièce à usiner (10) à serrer et les moyens de serrage (14) pouvant être respectivement déplacés par ressort dans leurs positions de serrage, dans lesquelles la pièce à usiner (10) reposant sur le support de serrage (11) peut être serrée contre la butée (13) en utilisant les moyens de serrage (14), les moyens de serrage (14) étant respectivement guidés de manière mobile dans un guide de moyens de serrage (12) le long du support de serrage (11), les moyens de serrage (14) présentant respectivement un élément de ressort (15) agissant dans la direction de la position de serrage, les moyens de serrage (14) dépassant du support de serrage (11), et les moyens de serrage (14) étant respectivement reliés à une pièce de liaison (27), laquelle est reliée mécaniquement à l'élément de ressort (15) respectif, **caractérisé en ce que** le guide de moyen de serrage respectif (12) est encastré dans le support de serrage (11), et **en ce que** l'élément de ressort respectif (15) est maintenu dans une poche de guidage (29) en dessous du support de serrage (11) et s'appuie, d'une part, sur le fond de la poche de guidage (29) et, d'autre part, sur la pièce de liaison respective (27).

2. Dispositif selon la revendication 1, **caractérisé en ce qu'au** moins l'un des éléments de ressort (15) est conçu comme un ressort de traction, qui est de préférence serré entre une face frontale (9) du dispositif (100) pourvue de la butée (13) et le moyen de serrage (14), et/ou **en ce qu'**au moins l'un des éléments de ressort (15) est conçu comme un ressort de compression, qui est de préférence serré entre une face (4) du dispositif (100) opposée à la butée (13) et le moyen de serrage (14).

3. Dispositif selon l'une des revendications précédentes, **caractérisé en ce que** les moyens de serrage (14) s'étendent dans leur sens longitudinal transversalement au support de serrage (11).

4. Dispositif selon l'une des revendications précédentes, **caractérisé en ce qu'au** moins l'un des moyens de serrage (14) et/ou la butée (13) est ou sont conçu(s) pour maintenir la pièce à usiner (10) sur le support de serrage (11), où une surface de serrage (23) ou une surface de butée (24) s'engageant sur la pièce à usiner (10) est ou sont de préférence conçue(s) de manière oblique et est ou sont inclinée(s) par rapport au support de serrage (11).

5. Dispositif selon la revendication 4, **caractérisé en ce que** l'angle inclus (20) entre la surface de serrage (23) ou la surface de butée (24) et le support de serrage (11) est compris entre 85° et 89°, de préférence 87°.

6. Dispositif selon l'une des revendications précédentes, **caractérisé en ce que** le moyen de serrage (14) et/ou la butée (13) est ou sont prévus de manière amovible sur le dispositif.

7. Dispositif selon l'une des revendications précédentes, **caractérisé en ce qu'**au moins deux des guides d'éléments de serrage (12) sont sensiblement parallèles entre eux.

8. Dispositif selon l'une des revendications précédentes, **caractérisé en ce que** les moyens de serrage (14) peuvent être couplés à un dispositif de rappel (25) pour un déplacement à l'encontre de la force du ressort agissant en direction de la position de serrage.

9. Dispositif selon l'une des revendications précédentes, **caractérisé en ce qu'**au moins un moyen de serrage (14) présente une surface de serrage (23) de forme convexe destinée à une prise sur la pièce à usiner (1).

10. Installation d'usinage (200) comprenant un dispositif (100) selon l'une des revendications précédentes.

11. Installation d'usinage (200) selon la revendication 10, **caractérisée en ce qu'**au moins un poste d'usinage (201) est prévu pour l'usinage mécanique d'une pièce à usiner (10) maintenue dans le dispositif (100), dans lequel le dispositif (100) peut être amené et évacué au moyen d'un dispositif de transport (202).

12. Installation d'usinage (200) selon l'une des revendications 10 ou 11, **caractérisée en ce que** l'installation d'usinage (200) comporte un dispositif de rappel (25) pour un déplacement des moyens de serrage (14) vers la position de repos, le dispositif de rappel (25) étant formé par un dispositif d'actionnement (49), le dispositif d'actionnement (49) étant conçu pour introduire une force de traction (53) et une force de compression (54) opposée dans le dispositif (100) et présentant au moins un organe de traction (51) pour transmettre la force de traction (53) au dispositif (100) et au moins un organe de compression (52) pour transmettre la force de compression (54) au dispositif (100), où au moins un organe de traction (51) et au moins un organe de compression (52) sont reliés fonctionnellement pour produire un mouvement relatif (62) par le biais d'un actionneur (50) monté de façon flottante entre eux.
